# EUROPÄISCHE PATENTSCHRIFT

(11) **EP 0 953 477 B1**
(45) Veröffentlichungstag und Bekanntmachung des Hinweises auf die Patenterteilung: **05.03.2003**
(21) Anmeldenummer: 98122653.3
(22) Anmeldetag: 28.11.1998
(51) Int. Cl.: B60N 2/48

(54) **Anordnung zur stufenweisen Verstellung einer Kopfstütze an einer Sitzlehne eines Kfz.**
Arrangement for stepwise adjusting the headrest of a motor vehicle seat backrest
Disposition pour le réglage pas à pas d'un appuie-tête d'un dossier de siège de véhicule automobile

(30) Priorität: 30.04.1998 DE 19819503
(43) Veröffentlichungstag der Anmeldung: 03.11.1999
(73) Patentinhaber: KENDRION RSL GmbH & Co.KG, 57368 Lennestadt (DE); Adam Opel AG, 65423 Rüsselsheim (DE)
(72) Erfinder: Lohmann, Horst, 59846 Sundern (DE); Pokoy, Ralf, 57368 Lennestadt (DE); Fürll,Joachim, D-55130 Main (DE); Gimbel,Hans-Peter, D-65468 Trebur (DE)
(74) Vertreter: Patentanwälte Dipl.-Ing. Conrad Köchling Dipl.-Ing. Conrad-Joachim Köchling

(56) Entgegenhaltungen:
- EP-A- 0 822 117

## Beschreibung

Die Erfindung betrifft eine Anordnung zur stufenweisen Verstellung einer Kopfstütze an einer Sitzlehne eines Sitzes für Kraftfahrzeuge, bestehend aus mindestens einer an der Sitzlehne befestigten Raststange und einer auf der Raststange verschieblich angeordneten Kopfstütze.

Zum Stand der Technik sind vielfältige derartige Anordnungen bekannt, siehe z.B. EP-A-0 822 117.

Der Erfindung liegt die Aufgabe zugrunde, eine aus wenigen einfachen Bestandteilen bestehende Anordnung gattungsgemäßer Art zu schaffen, die äußerst funktionstüchtig und langlebig ist.

Zu Lösung dieser Aufgabe wird vorgeschlagen, daß an der Kopfstütze ein von der Raststange längs durchgriffener Stangenträger mit Rastnase gehaltert ist und in einer Ausnehmung des Stangenträgers ein Gleitschuh gehaltert ist, wobei der Stangenträger mit Rastnase mittels Federkraft gegen die Raststange angedrückt ist und der Stangenträger mit Rastnase entgegen der Federkraft relativ zur Raststange verschwenkbar ist, so daß die Rastnase außer Eingriff von der Raste der Raststange ist.

Diese Anordnung beinhaltet als wesentliche Elemente den Stangenträger mit Rastnase sowie den Gleitschuh und ein Federmittel. Diese Baueinheit ist in einen Einschubkanal für die Raststange in der Kopfstütze an der Mündung des Kanales eingesetzt und mit der Kopfstütze fest verbunden. In diese Einheit wird die Raststange eingeschoben. Dabei wird der Gleitschuh und der Stangenträger mittels der Federkraft gegen die Raststange auf Anlage gehalten, wobei die Rastnase des Stangenträgers je nach Position in eine der Rasten der Kopfstütze einfällt. Die Verschiebemöglichkeit der Kopfstütze ist damit blockiert. Sofern die Kopfstütze verschoben werden soll, so kann die Kopfstütze und damit der Stangenträger mit der Rastnase entgegen der Federkraft relativ zur Raststange so verschwenkt werden, daß die Rastnase außer Eingriff von der Raste der Raststange ist. Die Kopfstütze kann daraufhin längs der Raststange verschoben werden. Wird die Kopfstütze losgelassen, so wird aufgrund der Federkraft wieder eine Ausrichtung des Stangenträgers mit der Rastnase relativ zu den Rasten der Raststange erreicht, so daß die Raste in eine Rastung der Raststange einfahren kann. Es ist somit eine Arretierung der Kopfstütze in unterschiedlichen Positionen möglich.

Vorzugsweise ist vorgesehen, daß der Stangenträger mit Rastnase in Fahrtrichtung des mit der Anordnung bestückten Fahrzeugs entgegen Federkraft verschwenkbar ist.

In der Gebrauchslage erfolgt die Betätigung bzw. Verschwenkung der Kopfstütze in deren oberem Drittel durch leichte Kippbewegung in Fahrtrichtung ( in Einbaulage nach vorn), so daß dann das Lösen der Rastverbindung erfolgt.

Eine bevorzugte Weiterbildung wird darin gesehen, daß der Stangenträger mit dem Gleitschuh über eine Spannfeder verbunden ist, mittels derer der Stangenträger mit der Rastnase gegen die Raststange mit Rasten angezogen ist und der Gleitschuh an die den Rasten der Raststange gegenüberliegende Seite der Raststange angezogen ist, wobei der Stangenträger ausreichendes Bewegungsspiel quer zur Raststange zu deren Längserstreckung aufweist, um durch Querverschiebung oder Verkantung entgegen der Kraft der Spannfeder die Rastnase aus der Rastung der Raststange zu lösen.

Der Stangenträger und der Gleitschuh können einfache Kunststoffspritzteile sein, während die Spannfeder ein entsprechend gebogener Federdrahtabschnitt sein kann. Es ist klar, daß zur Ermöglichung der Kipp- oder Schwenkbewegung des Stangenträgers die Bemessung so vorgenommen sein muß, daß der die Raststange aufnehmende Kanal innerhalb des Stangenträgers zumindest in der gewünschten Bewegungsrichtung größer bemessen ist als der Querschnitt der Raststange, so daß ein ausreichendes Bewegungsspiel zum Kippen und zum Entrasten erreicht ist.

Eine besonders bevorzugte Weiterbildung wird darin gesehen, daß die Spannfeder ein U-förmiger Federbügel ist, dessen Schenkelenden am Stangenträger gehaltert sind, dessen Schenkel etwa parallel zur Längserstreckung des Stangenträgers und der diesen durchgreifenden Raststange gerichtet sind und dessen Basis die Ausnehmung des Stangenträgers samt dem darin befindlichen Gleitschuh übergreift.

Üblicherweise weist eine Raststange an ihrem Ende eine Anschlagkerbe auf, die das vollständige Abschieben der Kopfstütze von der Raststange verhindert. Um diese Anschlagkerbe wirksam mit einem entsprechenden Anschlag an Teilen der Kopfstütze zu kombinieren, wird vorgeschlagen, daß der Gleitschuh ein von dem Federbügel beaufschlagtes erstes Teil und in Längsrichtung parallel zur Raststange dem ersten Teil folgend ein zweites Teil aufweist, welches mit dem ersten Teil scharnierartig verbunden ist, wobei ein zweites Federmittel vorgesehen ist, welches das zweite Teil an die Raststange auf der den Rastkerben abgewandten Seite angedrückt hält, wobei die Raststange am freien Ende eine Fangkerbe aufweist, in die der zweite Teil rastend eingreift, wenn die Kopfstütze mit dem Stangenträger sich in der maximalen Auszugsstellung befindet.

Der zweite Teil des Gleitschuhs ist durch ein separates Federmittel beaufschlagt und wird gegen die Seite der Raststange auf Andruck gehalten, die frei von Rastkerben ist, die aber nahe des freien Endes der Raststange die Anschlagkerbe oder Fangkerbe aufweist. Beim Verschieben der Kopfstütze samt des daran gehaltenen Stangenträgers in die maximale Auszugsposition greift der zweite Teil des Gleitschuhs rastend in die Fangkerbe der Raststange ein, so daß ein Abschieben der Kopfstütze vermieden ist.

Bevorzugt ist dazu vorgesehen, daß das zweite Federmittel ein zweiter U-förmiger Federbügel ist, der parallel zu dem ersten Federbügel angeordnet und mit seinen Schenkeln am Stangenträger gehaltert ist, wobei die Basis des Federbügels den zweiten Teil des Geleitschuhs übergreift und mit Federkraft gegen die Raststange angedrückt hält.

Eine bevorzugte Weiterbildung wird noch darin gesehen, daß die Rastnase des Stangenträgers durch einen Stababschnitt gebildet ist, der in zwei parallelen Wandungsteilen des Stangenträgers mit seinen Enden gehaltert ist.

Ein Ausführungsbeispiel der Erfindung ist in der Zeichnung dargestellt und im folgenden näher beschrieben.

Es zeigt:

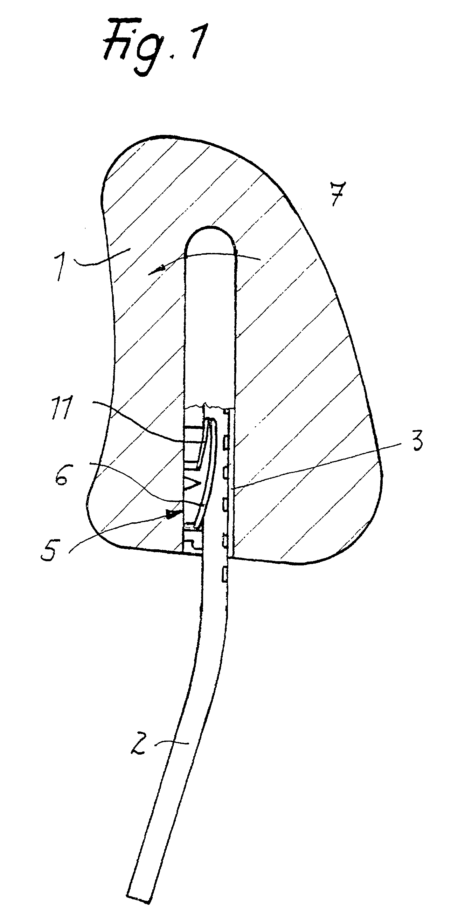

- Figur 1: eine Kopfstütze mit Stangenträger und Raststange in Seitenansicht, teilweise aufgebrochen;
- Figur 2: eine Einzelheit der Figur 1 in vergrößerter Darstellung in der Gebrauchslage;
- Figur 3: desgleichen in einer Entrastungslage;

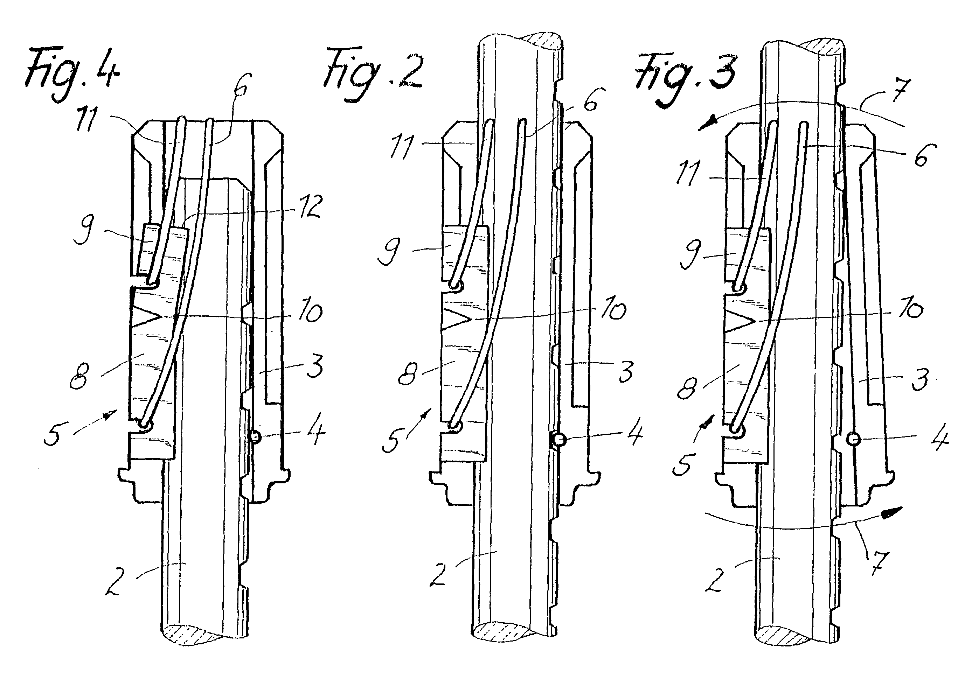

- Figur 4: desgleichen bei maximaler Abschubstellung der Kopfstütze relativ zur Raststange;

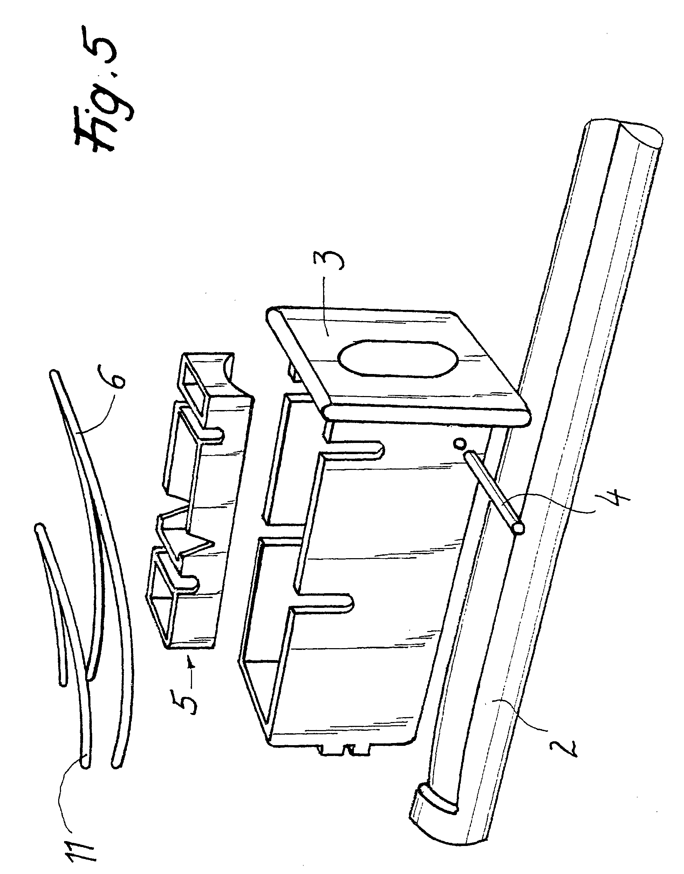

- Figur 5: eine explosionsartige Darstellung der Einzelteile der Anordnung in Ansicht.

In der Zeichnung ist eine Anordnung zur stufenweisen Verstellung einer Kopfstütze 1 an einer Sitzlehne eines Sitzes von Kraftfahrzeugen gezeigt. Die Anordnung besteht aus einer an der Sitzlehne befestigten Raststange 2 und einer auf der Raststange verschieblich angeordneten Kopfstütze 1. Zum Zwecke der verschieblichen Anordnung ist an der Kopfstütze 1 an der Mündung des Einschubkanals für die Raststange 2 jeweils ein von der Raststange 2 längs durchgriffener Stangenträger 3 mit Rastnase 4 gehalten. In einer fensterartigen Ausnehmung des Stangenträgers 3 ist ein Gleitschuh 5 relativ zum Stangenträger unverschieblich gehaltert. Der Stangenträger 3 mit Rastnase 4 ist mittels Federkraft einer Feder 6 gegen die Raststange 2 angedrückt gehalten, so daß die Rastnase 4 in einer entsprechenden Rastkerbe der Raststange 2 sitzt. Diese Position ist beispielsweise in Figur 2 verdeutlicht. Um die Kopfstütze 1 längs der Raststange 2 verschieben zu können, ist es erforderlich, die Kopfstütze samt Stangenträger in Richtung des Pfeiles 7 entgegen der Kraft der Feder 6 relativ zur Raststange 2 zu Verschwenken, so daß die Rastnase 4 außer Eingriff von der entsprechenden Raste der Raststange 2 ist. Diese Position ist in Figur 3 gezeigt. Der Stangenträger 3 mit Rastnase 4 ist dabei vorzugsweise in Fahrtrichtung des Fahrzeuges entgegen Federkraft verschwenkbar. Die Betätigung erfolgt in der Weise, daß die Kopfstütze 1 an ihrem oberen Drittel erfaßt und in Richtung des Bewegungspfeiles 7 in Fahrtrichtung nach vorn leicht gekippt wird. Hierdurch wird der mit dem Innenteil der Kopfstütze fest verbundene Stangenträger 3 ebenfalls gekippt, da er der Bewegung der Kopfstütze 1 folgen muß. Infolgedessen wird die Raste 4 aus der Rastung der Raststange 2 ausgehoben und die Kopfstütze 1 kann entlang der Raststange verschoben werden.

Der Stangenträger 3 ist mit dem Gleitschuh 5 über eine Spannfeder ( Feder 6 ) verbunden, mittels derer der Stangenträger 3 mit der Rastnase 4 gegen die Raststange 2 angezogen ist und auch der Gleitschuh 5 an die den Rasten der Raststange 2 gegenüberliegende Seite der Raststange 2 angezogen ist. Der Stangenträger 3 weist einen Durchgriffskanal für die Raststange 2 auf, der ausreichendes Bewegungsspiel quer zur Raststangenlängserstreckung zur Verfügung stellt, um eine Querverschiebung oder Verschwenkung des Stangenträgers 3 entgegen der Kraft der Spannfeder 6 zu ermöglichen, um so die Rastnase 4 aus der Rastung der Raststange 2 lösen zu können.

Die Spannfeder 6 ist ein U-förmiger Federbügel, dessen Schenkelenden am Stangenträger in geeigneten Auflagern gehalten sind, wobei die Schenkel etwa parallel zur Längsrichtung des Stangenträgers 3 und der diesen durchgreifenden Raststange 2 gerichtet sind. Die Basis des Federbügels ist in eine entsprechende Kerbe des Gleitschuhs 5 eingesetzt und übergreift in diesen Bereich den Gleitschuh 5.

Der Gleitschuh 5 weist ein von den Federbügel 6 beaufschlagtes erstes Teil 8 und in Längsrichtung parallel zur Raststange 2 dem ersten Teil 8 folgend zum inneren der Kopfstütze hin versetzt ein zweites Teil 9 auf, welches mit dem ersten Teil 8 scharnierartig ( bei 10) verbunden ist. Es ist ein zweites Federmittel 11 vorgesehen, welches das zweite Teil 9 an die Raststange 2 auf der den Rastkerben abgewandten Seite angedrückt hält. Die Raststange 2 weist an ihrem freien Ende eine Fangkerbe 12 auf, in die der zweite Teil 9 rastend unter der Wirkung der Feder 11 eingreift, wenn die Kopfstütze 1 mit dem Stangenträger 3 sich in der maximalen Auszugsstellung befindet. Es wird hierdurch ein Abschieben der Kopfstütze von der Raststange 2 unterbunden.

Das zweite Federmittel 11 ist ebenfalls ein U-förmiger Federbügel, der etwa parallel zu dem ersten Federbügel 6 angeordnet ist und mit seinen Schenkeln ebenfalls am Stangenträger gehaltert ist, vorzugsweise mit den Schenkelenden, wobei die Basis des Federbügels den zweiten Teil 9 des Gleitschuhs 5 übergreift und in einer entsprechenden Kerbe des Teiles 9 sitzt. Auf diese Weise wird der zweite Teil 9 mittels der Federkraft gegen die Raststange 2 angedrückt gehalten.

Die Rastnase 4 des Stangenträgers 3 kann durch einen Stababschnitt gebildet sein, der zwischen zwei parallelen Wandungsteilen des Stangenträgers 3 mit seinen Enden gehaltert ist. Hierdurch ist der mittlere zwischen den Seitenwandungen befindliche Teil freigelegt und kann als Rastnase 4 mit den Rasten der Raststange 2 zusammenwirken.

Die Erfindung ist nicht auf das Ausführungsbeispiel beschränkt sondern im Rahmen der Offenbarung vielfach variabel.

Alle neuen, in der Beschreibung und/oder Zeichnung offenbarten Einzel- und Kombinationsmerkmale werden als erfindungswesentlich angesehen, wobei die Erfindung durch die Ansprüche definiert ist.

## Patentansprüche

1. Anordnung zur stufenweisen Verstellung einer Kopfstütze an einer Sitzlehne eines Sitzes für Kraftfahrzeuge, bestehend aus mindestens einer an der Sitzlehne befestigten Raststange (2) und einer auf der Raststange (2) verschieblich angeordneten Kopfstütze (7), **dadurch gekennzeichnet, daß** an der Kopfstütze (1) ein von der Raststange (2) längs durchgriffener Stangenträger (3) mit Rastnase (4) gehaltert ist und in einer Ausnehmung des Stangenträgers (3) ein Gleitschuh (5) gehaltert ist, wobei der Stangenträger (3) mit Rastnase (4) mittels Federkraft gegen die Raststange (2) angedrückt ist und der Stangenträger (3) mit Rastnase (4) entgegen der Federkraft relativ zur Raststange (2) verschwenkbar ist, so daß die Rastnase (4) außer Eingriff von der Raste der Raststange (2) ist.

2. Anordnung nach Anspruch 1, **dadurch gekennzeichnet, daß** der Stangenträger (3) mit Rastnase (4) in Fahrtrichtung des mit der Anordnung bestückten Fahrzeugs entgegen Federkraft verschwenkbar ist.

3. Anordnung nach einem der Ansprüche 1 oder 2, **dadurch gekennzeichnet, daß** der Stangenträger (3) mit dem Gleitschuh (5) über eine Spannfeder (6) verbunden ist, mittels derer der Stangenträger (3) mit der Rastnase (4) gegen die Raststange (2) mit Rasten angezogen ist und der Gleitschuh (5) an die den Rasten der Raststange (2) gegenüberliegende Seite der Raststange (2) angezogen ist, wobei der Stangenträger (3) ausreichendes Bewegungsspiel quer zur Raststange (2) zu deren Längserstreckung aufweist, um durch Querverschiebung oder Verkantung entgegen der Kraft der Spannfeder (6) die Rastnase (4) aus der Rastung der Raststange (2) zu lösen.

4. Anordnung nach einem der Ansprüche 1 bis 3, **dadurch gekennzeichnet, daß** die Spannfeder (6) ein U-förmiger Federbügel ist, dessen Schenkelenden am Stangenträger (3) gehaltert sind, dessen Schenkel etwa parallel zur Längserstreckung des Stangenträgers (3) und der diesen durchgreifenden Raststange (2) gerichtet sind und dessen Basis die Ausnehmung des Stangenträgers (3) samt dem darin befindlichen Gleitschuh (5) übergreift.

5. Anordnung nach einem der Ansprüche 1 bis 4, **dadurch gekennzeichnet, daß** der Gleitschuh (5) ein von dem Federbügel (6) beaufschlagtes erstes Teil (8) und in Längsrichtung parallel zur Raststange (2) dem ersten Teil (8) folgend ein zweites Teil (9) aufweist, welches mit dem ersten Teil (8) scharnierartig verbunden ist, wobei ein zweites Federmittel (11) vorgesehen ist, welches das zweite Teil (9) an die Raststange (2) auf der den Rastkerben abgewandten Seite angedrückt hält, wobei die Raststange (2) am freien Ende eine Fangkerbe (12) aufweist, in die der zweite Teil (9) rastend eingreift, wenn die Kopfstütze (1) mit dem Stangenträger (3) sich in der maximalen Auszugsstellung befindet.

6. Anordnung nach Anspruch 5, **dadurch gekennzeichnet, daß** das zweite Federmittel (11) ein zweiter U-förmiger Federbügel ist, der parallel zu dem ersten Federbügel (6) angeordnet und mit seinen Schenkeln am Stangenträger (3) gehaltert ist, wobei die Basis des Federbügels den zweiten Teil (9) des Geleitschuhs (5) übergreift und mit Federkraft gegen die Raststange (2) angedrückt hält.

7. Anordnung nach einem der Ansprüche 1 bis 6, **dadurch gekennzeichnet, daß** die Rastnase (4) des Stangenträgers (3) durch einen Stababschnitt gebildet ist, der in zwei parallelen Wandungsteilen des Stangenträgers (3) mit seinen Enden gehaltert ist.

## Claims

1. An arrangement for the step-by-step adjustment of a headrest on a backrest of a seat for motor vehicles, consisting of at least one locking rod (2) fixed to the backrest and a headrest (7) displaceably disposed on the locking rod (2),
**characterised in that** a rod support (3), through which the locking rod (2) longitudinally penetrates, with detent (4) is mounted on the headrest (1) and a sliding block (5) is mounted in a recess in the rod support (3), with the rod support (3) with detent (4) being forced by spring resistance against the locking rod (2) and the rod supports (3) with detent (4) being able to swivel in relation to the locking rod (2) against the spring resistance so that the detent (4) does not engage with the catch of the locking rod (2).

2. An arrangement according to Claim 1,
**characterised in that** the rod support (3) with detent (4) can be swivelled in the direction of travel of the vehicle fitted with the arrangement against spring resistance.

3. An arrangement according to one of Claims 1 or 2,
**characterised in that** the rod support (3) is connected to the sliding block (5) via a tensioning spring (6), by means of which the rod support (3) with the detent (4) is drawn towards the locking rod (2) with catches and the sliding block (5) is drawn to the side of the locking rod (2) opposite the catches of the locking rod (2), with the rod support (3) having sufficient free motion at right angles to the locking rod (2) to its longitudinal extension, so as to release the detent (4) from the catch of the locking rod (2) by transverse displacement or tilting against the force of the tensioning spring (6).

4. An arrangement according to one of Claims 1 to 3,
**characterised in that** the tensioning spring (6) is a U-shaped spring clip, the leg ends of which are mounted on the rod support (3), the legs of which are directed roughly parallel to the longitudinal extension of the rod support (3) and of the locking rod (2) passing therethrough and the base of which engages over the recess of the rod support (3) together with the sliding block (5) situated therein.

5. An arrangement according to one of Claims 1 to 4,
**characterised in that** the sliding block (5) comprises a first part (8) stressed by the spring clip (6) and following the first part (8) in the longitudinal direction parallel to the locking rod (2) comprises a second part (9), which is connected to the first part (8) in the manner of a hinge, with a second spring means (11) being provided, which keeps the second part (9) pressed against the locking rod (2) on the side remote from the notches, with the locking rod (2) comprising a catch notch (12) at the free end, into which the second part (9) engages by locking when the headrest (1) with the rod support (3) is situated in the maximum extension position.

6. An arrangement according to Claim 5,
**characterised in that** the second spring means (11) is a second U-shaped spring clip, which is disposed parallel to the first spring clip (6) and by its legs is mounted on the rod support (3), with the bottom of the spring clip engaging over the second part (9) of the sliding block (5) and pressing it by spring resistance against the locking rod (2).

7. An arrangement according to one of Claims 1 to 6,
**characterised in that** the detent (4) of the rod support (3) is formed by a bar portion, which is mounted by its ends in two parallel wall parts of the rod support(3).

## Revendications

1. Disposition pour le réglage pas à pas d'un appuie-tête d'un dossier de siège de véhicule automobile, composée d'au moins une tige d'arrêt (2) fixée au dossier du siège et d'un appuie-tête (7) placé de manière mobile sur la tige d'arrêt (2), **caractérisée en ce qu'**un support de tige (3) avec taquet d'arrêt (4) traversé en long par la tige d'arrêt (2) est maintenu sur l'appuie-tête (1) et qu'un patin de guidage (5) est maintenu dans un évidement du support de tige (3), le support de tige (3) avec taquet d'arrêt (4) étant pressé par tension de ressort contre la tige d'arrêt (2) et que le support de tige (3) avec taquet d'arrêt (4) peut être pivoté à l'encontre de la tension de ressort par rapport à la tige d'arrêt (2), de sorte que le taquet d'arrêt (4) n'est plus en prise avec le cran de la tige d'arrêt (2).

2. Disposition selon la revendication 1, **caractérisée en ce que** le support de tige (3) avec taquet d'arrêt (4) peut être pivoté dans le sens de marche du véhicule muni de la disposition, à l'encontre de la tension de ressort.

3. Disposition selon l'une des revendications 1 ou 2, **caractérisée en ce que** le support de tige (3) est raccordé au patin de guidage (5) par l'intermédiaire d'un ressort tendeur (6), au moyen duquel le support de tige (3) avec taquet d'arrêt (4) est tiré contre la tige d'arrêt (2) avec crans d'arrêt, et que le patin de guidage (5) est tiré vers le côté de la tige d'arrêt (2) opposé aux crans d'arrêt de la tige d'arrêt (2), le support de tige (3) présentant un jeu suffisant transversalement à la tige d'arrêt (2) vers son prolongement longitudinal, afin de détacher le taquet d'arrêt (4) hors de l'encliquetage de la tige d'arrêt (2) grâce à un mouvement transversal ou un basculement contre la force du ressort tendeur (6).

4. Disposition selon l'une des revendications 1 à 3, **caractérisée en ce que** le ressort tendeur (6) est un étrier de ressort en forme de U, dont les extrémités de branches sont maintenues sur le support de tige (3), dont les branches sont dirigées pratiquement parallèlement au prolongement longitudinal du support de tige (3) et de la tige d'arrêt (2) traversant celui-ci et dont la base recouvre l'évidement du support de tige (3) avec le patin de guidage (5) qui se trouve à l'intérieur.

5. Disposition selon l'une des revendications 1 à 4, **caractérisés en ce que** le patin de guidage (5) présente une première partie (8) contrainte par l'étrier de ressort (6) et une seconde partie (9) suivant la première partie (8) en sens longitudinal parallèlement à la tige d'arrêt (2), laquelle seconde partie est raccordée par articulation à la première partie (8), un second ressort (11) étant prévu lequel maintient la seconde partie (9) appuyée contre la tige d'arrêt (2) sur le côté détourné des encoches d'arrêt, la tige d'arrêt (2) présentant sur l'extrémité libre une encoche d'attache (12) dans laquelle a prise la seconde partie (9) en s'encliquetant lorsque l'appuie-tête (1) avec le support de tige (3) se trouve en position étirée maximale.

6. Disposition selon la revendication 5, **caractérisés en ce que** le second ressort (11) est un second étrier de ressort en forme de U, disposé parallèlement au premier étrier de ressort (6) et est maintenu avec ses branches sur le support de tige (3), la base de l'étrier de ressort chevauchant la seconde partie (9) du patin de guidage (5) et la maintenant appuyée avec tension de ressort contre la tige d'arrêt (2).

7. Disposition selon l'une des revendications 1 à 6, **caractérisée en ce que** le taquet d'arrêt (4) du support de tige (3) est formé par une section de barre maintenue avec ses extrémités dans deux parties de paroi parallèles du support de tige (3).
